Europäisches Patentamt

European Patent Office

Office européen des brevets

(19)

(11) Numéro de publication : **0 148 797 B1**

# FASCICULE DE BREVET EUROPÉEN

(12)

(45) Date de publication du fascicule du brevet :
**11.10.89**

(51) Int. Cl.⁴ : **B 60 J   1/00**

(21) Numéro de dépôt : **85400016.3**

(22) Date de dépôt : **07.01.85**

(54) **Vitrage d'automobile pour le montage direct et procédé pour monter ce vitrage dans la baie d'une carrosserie de véhicule.**

(30) Priorité : **09.01.84 DE 3400428**

(43) Date de publication de la demande :
**17.07.85 Bulletin 85/29**

(45) Mention de la délivrance du brevet :
**11.10.89 Bulletin 89/41**

(84) Etats contractants désignés :
**BE DE FR GB IT SE**

(56) Documents cités :
**GB–A– 1 433 218**
**GB–A– 2 112 842**

(73) Titulaire : **SAINT-GOBAIN VITRAGE**
**"Les Miroirs" 18, avenue d'Alsace**
**F-92400 Courbevoie (FR)**
**BE FR GB IT SE**
**VEGLA Vereinigte Glaswerke GmbH**
**Viktoriaallee 3-5**
**D-5100 Aachen (DE)**
**DE**

(72) Inventeur : **Kunert, Heinz, Dr.**
**Am Krielerdom 23**
**D-5000 Köln 41 (DE)**

(74) Mandataire : **Muller, René et al**
**SAINT-GOBAIN RECHERCHE 39, quai Lucien Lefranc**
**F-93304 Aubervilliers (FR)**

EP 0 148 797 B1

## Description

L'invention a trait à un vitrage destiné à être mis en position et pressé contre le rebord du cadre d'une baie de véhicule automobile, ainsi que son procédé de fixation directement contre ledit rebord au moyen d'un cordon adhésif thermodurcissable (vitrage et procédé du type divulgué, par exemple, par GB-A-2 112 842).

Lors du montage direct du vitrage dans la baie d'une carrosserie d'automobile, la pose du vitrage, par exemple du pare-brise ou de la lunette arrière, s'effectue par collage direct. Dans ce cas, on applique un cordon d'adhésif au moyen d'un ajutage d'extrusion sur la zone du bord du vitrage et on monte le vitrage dans le cadre de la baie de la carrosserie, de sorte que le cordon d'adhésif encore mou s'applique sur tout le pourtour du vitrage contre le rebord de fixation du cadre et que le vitrage est directement collé de manière étanche au rebord de fixation.

Lors du montage direct, les vitrages doivent être positionnés avec précision à l'intérieur du cadre de telle façon que le joint subsistant entre le bord du vitrage et la feuillure du cadre ait la même largeur sur tout le pourtour.

Tant que le cordon d'adhésif n'a pas encore durci, mais est encore plastiquement déformable, les vitrages montés dans les cadres des baies ne conservent cependant pas leur position, mais descendent sous l'effet de leur poids propre. Pour éviter cet inconvénient et pour maintenir le vitrage dans la position voulue en hauteur, on insère des cales d'espacement entre la feuillure au bas du cadre et le bord inférieur du vitrage. Ces cales d'espacement peuvent être cunéiformes, de sorte que la largeur souhaitée du joint peut être réglée par un enfoncement plus ou moins profond de la cale. En lieu et place de ces cales d'espacement qui sont enlevées après durcissement de la matière adhésive, on utilise aussi des moyens d'entretoisement réglables en hauteur et fixés sur la feuille du cadre, par exemple sous forme de disques montés de manière excentrique qui, le cas échéant après le durcissement de la matière adhésive, restent dans la feuillure du cadre de la baie.

Dans le cas du montage avec épousement de forme des vitrages d'automobiles, dans lequel, à cause de l'aérodynamisme exigé, la surface des vitrages et celle des parties adjacentes de la carrosserie se raccordent l'une à l'autre avec affleurement, un autre problème est dû au fait qu'en règle générale les vitrages cintrés présentent des tolérances de cintrage. Pour obtenir un raccordement avec affleurement, il faut que le vitrage, après sa mise en place, soit pressé sur tout son pourtour contre le rebord de fixation du cadre de la baie. Le cas échéant, les écarts de cintrage du vitrage doivent être compensés par ces forces de pression. Ces forces de pression doivent être maintenues jusqu'à ce que la matière adhésive utilisée soit durcie au point que les forces de cohésion de cette matière adhésive suffisent pour empêcher le vitrage déformé élastiquement de revenir à son état initial.

Il est connu, par le document GB-A-2 112 842, d'utiliser des attaches métalliques déformables élastiquement pour maintenir un vitrage dans une position déterminée pendant la durée de durcissement d'un adhésif servant au fixage du vitrage dans le cadre d'une baie de carrosserie d'automobile. Ces attaches, grossièrement en forme de S, sont fixées par pincement au bord du vitrage et au bord du cadre de la baie. Une des extrémités de l'attache est fixée d'abord sur le bord du vitrage.

Pendant le montage, l'attache est déformée élastiquement de telle sorte que l'autre extrémité vient pincer le rebord du cadre de la baie. L'extrémité de l'attache fixée par pincement au bord du vitrage est munie de pattes qui s'appuient sur le pourtour du cadre et permettent de maintenir un intervalle constant entre le bord du vitrage et le cadre de la baie.

Ces attaches présentent des inconvénients en ce que, fixées sur un bord du vitrage par pincement, elles prennent appui sur les deux faces du vitrage, ce qui n'est pas souhaité ; en outre, du fait que les pattes sont fixées aux attaches, la distance entre le bord du vitrage et le cadre de la baie ne peut être modifiée ; d'autre part, l'attache se fixe au cadre de la baie par pincement lorsqu'on l'applique sur le cadre, ce qui ne permet pas un ajustement aisé de la position du vitrage par rapport au cadre de la baie.

L'invention a pour but de procurer un vitrage d'automobile et un procédé de montage du vitrage d'automobile dans une baie de carrosserie de véhicule, qui permette de réduire d'une part les frais de matériel ou d'outillage pour mettre le vitrage en place et le presser lors de son montage dans le cadre de la baie et d'autre part les frais de main-d'œuvre nécessaires à cet effet.

Suivant l'invention, ce but est réalisé par le fait que les moyens auxiliaires mécaniques sont formés de pattes d'attache qui, dans la zone marginale du vitrage couverte par le rebord de fixation du cadre de la baie, sont reliées à une distance définie du bord du vitrage à la face de ce vitrage opposée au rebord de fixation, sont faites d'une matière flexible et, après le positionnement du vitrage, peuvent être repliées autour du rebord de fixation du cadre de la baie.

Le vitrage d'automobile conforme à l'invention est pourvu de pattes d'attache dès sa fabrication, de sorte qu'aucune mesure supplémentaire ne doit être prise pendant le montage même de l'automobile. Lors du montage du vitrage, aucun moyen auxiliaire supplémentaire pour positionner ou presser le vitrage n'est nécessaire, car les forces de pression nécessaires sont exclusivement exercées par les pattes d'attache repliées.

Les pattes d'attache permettent de fixer la position du vitrage non seulement dans les deux dimensions du plan, mais aussi dans la troisième, c'est-à-dire dans la direction perpendiculaire à la surface du vitrage. A cet effet, des pattes d'attache particulièrement appropriées présentent, entre la base de fixation et la section d'extrémité repliable, une section coudée à angle droit qui prend appui contre le rebord de fixation du cadre de la baie et détermine la distance entre le vitrage et le rebord de fixation.

La matière et les dimensions des pattes d'attache doivent être choisies telles que le repliage des pattes autour du rebord de fixation puisse s'effectuer sans l'aide d'outils, c'est-à-dire simplement à la main.

D'autre part, les pattes d'attache doivent présenter une résistance à la flexion suffisante pour que, dans l'état replié, elles absorbent les forces nécessaires pour le maintien sûr du vitrage sans ainsi se déplier. Les matières préférées pour les pattes d'attache sont des métaux ductiles. Pour obtenir les propriétés de flexion et de résistance nécessaires, on peut, si nécessaire, ménager des ouvertures, des entailles ou l'équivalent dans les pattes d'attache.

Les pattes d'attache fixées conformément à l'invention sur la surface du vitrage sont reliées par une base à cette surface du vitrage et sont en particulier collées en place à l'aide d'une colle appropriée. Les pattes proprement dites s'étendent parallèlement à la surface du vitrage et sont orientées en direction du centre du vitrage. Une série de telles pattes d'attache est prévue sur tout le pourtour du vitrage et sur la surface de celle-ci, leur nombre devant être choisi en vue de l'obtention d'une fixation sûre du vitrage.

Des vitrages d'automobiles prévus pour le montage direct sont habituellement pourvus d'un revêtement en forme d'encadrement non transparent qui dissimule le cordon de colle de l'extérieur. La base de fixation est collée au vitrage avantageusement dans la zone de ce revêtement en forme d'encadrement, de sorte que les pattes d'attache sont aussi invisibles de l'extérieur.

Une forme d'exécution particulièrement avantageuse de l'invention comprend un vitrage d'automobile pourvu, en dehors de pattes d'attache, d'une bande d'adhésif profilée, faite d'un cordon d'adhésif extrudé et durci, ce cordon d'adhésif durci couvrant la base des pattes d'attache.

Dans cette forme d'exécution, avant le montage du vitrage dans le cadre de la baie, un cordon d'adhésif d'une minceur correspondante est appliqué sur la bande d'adhésif profilée, ce qui donne une meilleure stabilité de la jonction pendant la phase de durcissement du cordon d'adhésif et, en outre, raccourcit le temps de durcissement.

Divers exemples de réalisation sont décrits ci-après en détail avec référence aux dessins annexés, dans lesquels :

la Fig. 1 est une vue d'ensemble d'un pare-brise pourvu de pattes d'attache coudées ;

la Fig. 2 est une vue en perspective d'une patte d'attache en deux parties ;

la Fig. 3 est une vue en coupe suivant la ligne III-III de la Fig. 2 de la patte d'attache dans sa position verrouillée ;

la Fig. 4 illustre une autre forme d'exécution d'une patte d'attache en deux parties ;

la Fig. 5 illustre la patte d'attache représentée sur la Fig. 4 dans trois phases différentes de l'insertion de sa partie à insérer ;

la Fig. 6 illustre une forme d'exécution préférée d'un vitrage d'automobile conforme à l'invention pourvu de pattes d'attache intégrées dans un cordon d'adhésif appliqué sur la vitre, et

la Fig. 7 est une vue en coupe verticale d'un pare-brise conforme à l'invention monté dans une baie de carrosserie.

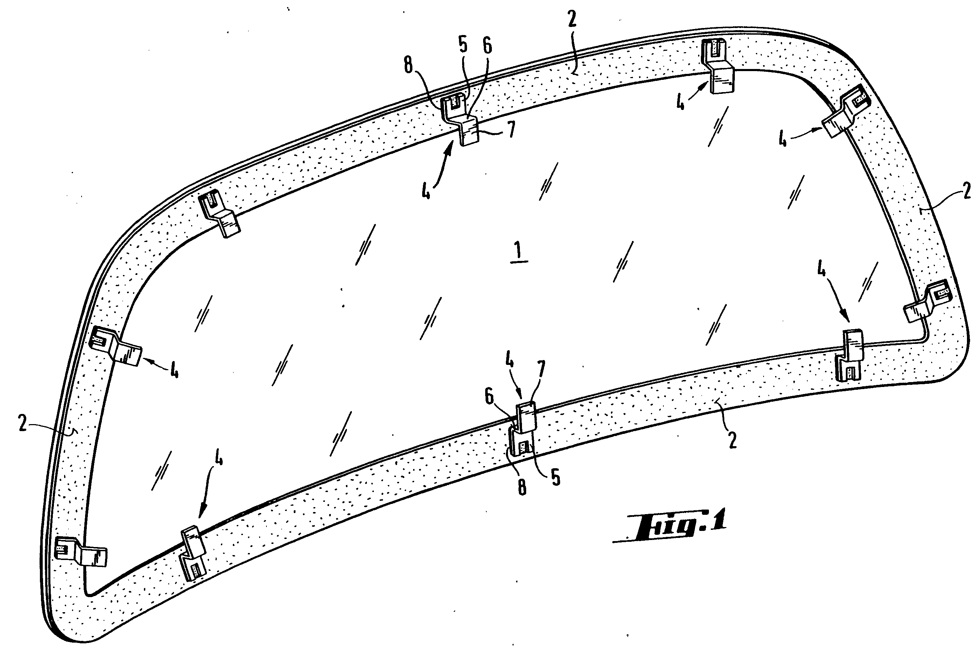

Le vitrage d'automobile 1 représenté sur la Fig. 1 est un pare-brise. Dans sa zone marginale, le pare-brise 1 est pourvu, tout le long de son pourtour, sur sa face tournée vers l'habitacle, d'une couche opaque 2 en forme d'encadrement. Cette couche 2 en forme d'encadrement peut, par exemple, être constituée d'une couche d'émail fondue ou cuite à haute température, qui est imprimée, par exemple par sérigraphie après la découpe du vitrage et est cuite ou fondue au cours du chauffage nécessaire pour le cintrage du vitrage. Par contre, la couche en forme d'encadrement 2 peut aussi être faite d'une autre matière, par exemple d'un vernis synthétique ou d'un polymère approprié résistant aux rayons UV et opaque.

Des pattes d'attache 4 sont disposées sur cette couche opaque 2 et sont réparties sur le pourtour du vitrage. Les pattes d'attache 4 présentent une base 5, une section médiane coudée à 90° environ par rapport à la base et une section d'extrémité en forme de bande 7 à nouveau coudée à environ 90° par rapport à la section médiane 6 et orientée en direction du centre du vitrage. La base 5 est reliée rigidement par l'intermédiaire d'une couche d'adhésif 8 adéquate à la couche en forme d'encadrement 2 et ainsi à la surface du vitrage 1.

Les pattes d'attache 4 sont faites d'un métal flexible. Les dimensions des pattes d'attache 4 sont choisies telles que les sections d'extrémité 7 d'une part peuvent être coudées à la main et d'autre part offrent cependant une rigidité à la flexion suffisante pour supporter, dans l'état coudé, le poids propre du vitrage et les forces de rappel provoquées par d'éventuelles déformations élastiques du vitrage. Le cas échéant, les propriétés mécaniques souhaitées peuvent aussi être obtenues par une conformation appropriée, par exemple par des entailles, des perforations, etc.

La longueur de la section médiane 6 des pattes d'attache est choisie telle qu'elle corresponde à la distance souhaitée entre la surface du vitrage et le rebord de fixation du cadre de la baie. Lors de son montage dans le cadre de la baie, le vitrage est alors pressé contre le rebord de fixation avec une force telle que la section médiane coudée 6 des pattes d'attache entre en contact avec le rebord de fixation.

L'application des pattes d'attache 4 s'effectue directement après la fabrication du vitrage, c'est-à-dire au cours de sa transformation en vitrage d'automobile, de sorte que les vitrages d'automobiles sont expédiés avec ces pattes d'attache 4. Pour ne pas risquer d'abîmer la surface du verre par contact avec les sections d'extrémité 7, les pattes d'attache 4 dans leur totalité, ou au moins leurs sections d'extrémité 7, peuvent être recouvertes d'une couche élastique molle.

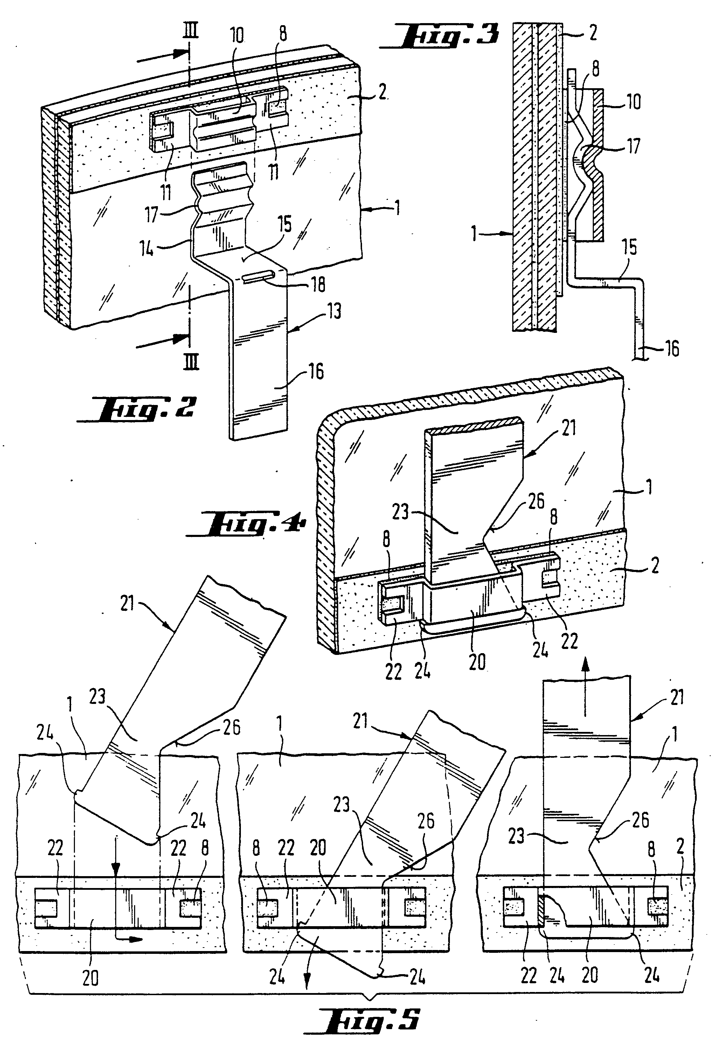

Les Fig. 2 et 3 illustrent, par une vue fragmentaire, un pare-brise comportant des pattes d'attache en deux pièces telles qu'on peut en utiliser en lieu et place des pattes d'attache 4 d'une seule pièce. Ces pattes d'attache en deux pièces ont l'avantage que leurs sections d'extrémité ne sont pas gênantes lors du transport du vitrage et qu'en outre, le risque de dégradation de la surface du verre est exclu.

La patte d'attache en deux pièces représentée ici est faite de l'étrier 10 à fixer sur le vitrage, dont les oreilles de base 11 sont collées sur la surface du verre, et de la patte à insérer 13 coopérante.

La fixation de l'étrier 10 sur le vitrage s'effectue au terme de la fabrication du vitrage, à nouveau au moyen d'une couche d'adhésif 8.

On introduit alors la patte à insérer 13 comportant la section de fixation 14 dans la fente d'insertion formée par la surface du vitrage et l'étrier 10, peu avant le montage du vitrage dans la carrosserie du véhicule.

Un façonnage adéquat de la section de fixation 14, formant par exemple une jonction à encliquetage 17, assure que la patte d'insertion 13 soit retenue par l'étrier 10. La section médiane 15 coudée à 90° correspond à nouveau, quant à sa longueur, à la distance souhaitée entre le vitrage et le rebord de fixation du cadre de la baie. La section d'extrémité 16 de la patte d'insertion 13 correspond du point de vue de ses propriétés mécaniques aux exigences telles qu'elles ont été citées dans l'exemple de réalisation décrit plus haut.

Une ouverture 18 est prévue entre la section médiane 15 et la section d'extrémité 16 le long de l'arête du pli. Cette ouverture 18 forme un endroit de rupture, le long duquel la section d'extrémité 16 peut être cassée après le durcissement final du cordon d'adhésif, si on veut éliminer les extrémités des pattes repliées par-dessus le rebord de fixation.

Une autre forme d'exécution d'une patte d'attache en deux pièces est illustrée sur les Fig. 4 et 5. Cette patte d'attache en deux pièces est d'une configuration telle qu'une jonction à épousement de forme est établie entre l'étrier 20 et la patte d'insertion 21. De cette façon, même dans le cas des pattes d'attache en deux pièces, il est possible d'absorber les forces produites par le poids propre du vitrage sans que les deux pièces risquent de se séparer l'une de l'autre sous l'effet de ces forces. Cette forme d'exécution des pattes d'attache convient par conséquent en particulier pour un montage le long du bord inférieur du vitrage, où les forces produites par le poids propre du vitrage agissent dans le sens de l'insertion.

L'étrier 20 est relié rigidement, par l'intermédiaire des deux oreilles de base 22, au moyen d'une couche d'adhésif 8, au vitrage ou à la couche opaque 2 appliquée sur celui-ci. La jonction à épousement de forme entre la patte d'insertion 21 et l'étrier 20 est obtenue grâce aux deux becs 24 qui s'accrochent sous l'étrier 20. Pour rendre possible l'introduction de la patte 21 dans la fente d'insertion formée par l'étrier 20, la patte 21 est pourvue d'une entaille 26 dans sa section d'insertion inférieure 23. La patte d'insertion 21 est, comme la Fig. 5 le montre dans trois phases successives, introduite dans la fente d'insertion dans une position inclinée latéralement. Lorsque les becs 24 se trouvent en dessous de l'étrier 20, la patte 21 est amenée dans la position perpendiculaire à l'étrier 20 dans laquelle les becs 24 peuvent alors s'accrocher en dessous de l'étrier 20.

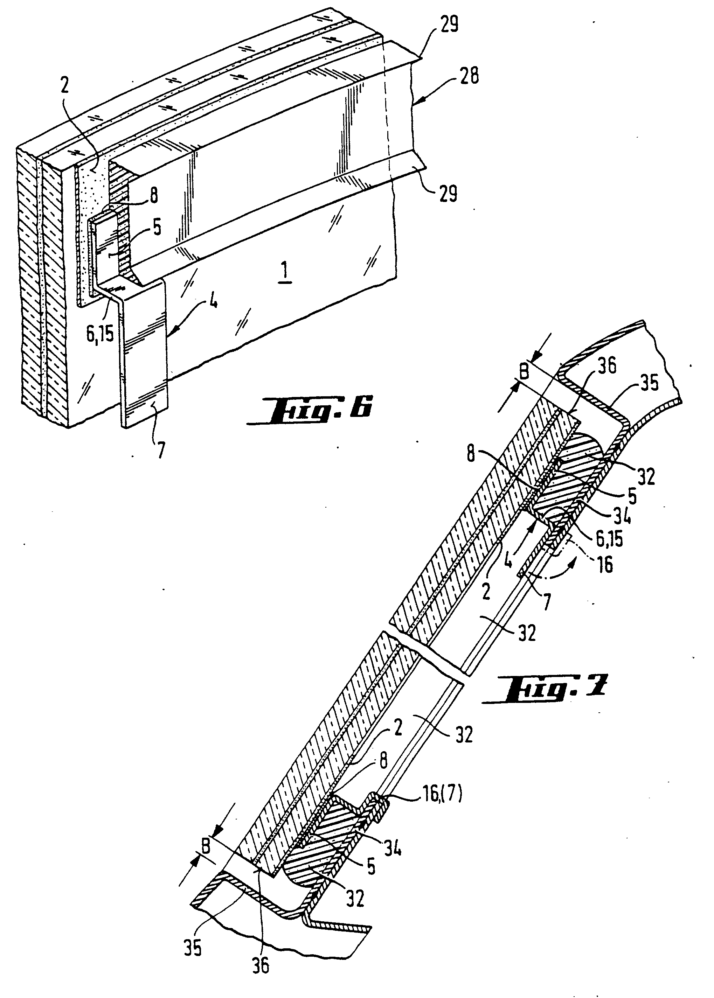

Une forme d'exécution particulièrement préférée d'un vitrage d'automobile conforme à l'invention est illustrée sur la Fig. 6. Sur la couche opaque 2 adhérant au vitrage sont fixées, à l'aide d'une couche d'adhésif 8, des pattes d'attache 4 disposées en série. Les pattes d'attache 4 sont recouvertes d'un cordon profilé 28 qui est également appliqué sur la couche opaque 2. Ce cordon profilé 28 est formé de préférence pendant la fabrication des vitrages par extrusion au moyen d'un ajutage d'extrusion de forme correspondante, le cordon profilé 28 étant déposé immédiatement après l'extrusion sur la zone marginale du vitrage, le cas échéant après un traitement préalable de nettoyage et d'application d'une couche de fond. Le cordon profilé 28 présente une section en forme de chenal en raison de ses ailes saillantes 29. Après son durcissement, ce cordon profilé 28 fait partie du cordon d'adhésif reliant le vitrage 1' au rebord de fixation, le chenal délimité par les ailes 29 étant destiné dans ce cas à recevoir un second cordon partiel qui est introduit dans le chenal de ce cordon profilé 28 immédiatement avant le montage du vitrage « prééquipé ».

Les pattes d'attache 4 sont intégrées de cette façon dans le cordon partiel d'adhésif. Le cas échéant, le montage des pattes d'attache 4 et du cordon partiel d'adhésif 28 sur le vitrage peut s'effectuer aussi au cours d'une seule et même phase du procédé, lorsque par exemple, lors du dépôt continu du cordon profilé 28, les pattes d'attache 4 sont mises en place, aux endroits prévus à cet effet, immédiatement avant l'application du cordon extrudé. Avec un vitrage prééquipé de cette façon des pattes d'attache 4 et du cordon partiel d'adhésif 28 durci, l'opération de montage du vitrage dans la carrosserie du véhicule est simplifiée d'une manière décisive.

La Fig. 7 illustre finalement, au moyen d'une coupe verticale passant par un pare-brise 1 mis en place dans une baie de carrosserie, la manière de procéder lors du montage du vitrage. Le pare-brise 1 présente la structure telle que décrite à propos de la Fig. 1 et comporte, tout le long de son pourtour, une série de pattes d'attache 4 coudées deux fois, dont les oreilles de base 5 sont fixées solidement au moyen d'une couche d'adhésif 8 et de la couche 2 en forme d'encadrement. Le long du bord du pare-brise 1, un cordon 32 d'un adhésif couvrant est appliqué sur la couche en forme d'encadrement 2 au moyen d'un ajutage d'extrusion. Ce cordon d'adhésif 32 recouvre simultanément les oreilles de base 5 des pattes d'attache 4.

Le pare-brise 1 est alors monté dans la baie de la carrosserie et est dans ce cas positionné d'une manière telle que la largeur B du joint entre les surfaces de délimitation 35 du cadre de la baie et les surfaces périphériques 36 du pare-brise 1 ait la même valeur sur toute sa longueur, c'est-à-dire que le pare-brise 1 est monté centré dans le cadre de la baie. Les pattes d'attache 4 ont pendant ce temps encore leur forme initiale. Lorsque la position centrale est atteinte, le vitrage 1 est pressé contre le rebord de fixation circonférentiel 34 et ce, au point que les pattes d'attache 4 touchent le rebord de fixation 34 par leur section médiane 6. Dans cette position, le pare-brise 1 occupe sa position optimale pour laquelle la surface antérieure du vitrage affleure les parties adjacentes de la carrosserie formant le cadre de la baie.

Dès que le pare-brise est ainsi positionné dans les trois dimensions, étant entendu qu'au cours de cette opération il subit le cas échéant aussi une flexion élastique, les pattes d'attache 4 de la série sont repliées à la main autour du rebord de fixation 34. Les pattes d'attache 4 disposées le long du bord inférieur du vitrage empêchent de cette façon le vitrage 1 de descendre sous l'effet de son propre poids. En même temps, elles fixent aussi la distance séparant le vitrage du rebord de fixation 34. Le vitrage est ainsi fixé suffisamment jusqu'au durcissement complet du cordon d'adhésif 32.

### Revendications

1. Vitrage destiné à être mis en position et pressé contre le rebord (34) du cadre d'une baie du véhicule automobile au moyen d'un cordon adhésif durcissable, comportant sur sa face tournée vers le rebord (34) une couche opaque formant encadrement (2) et des pattes d'attaches en métal (4, 13, 21) qui servent au maintien en position du vitrage dans le cadre de la baie jusqu'au durcissement complet du cordon adhésif, caractérisé en ce que les pattes d'attache (4, 13, 21) sont collées sur la couche opaque (2) à distance de l'arête périphérique du vitrage et sont faites en métal déformable leur permettant, après mise en position et pressage du vitrage, d'être repliées autour du rebord en vue du maintien en position du vitrage.

2. Vitrage selon la revendication 1, caractérisé en ce qu'il est pourvu, sur la couche opaque formant encadrement, d'un cordon adhésif partiel (28) formant une partie du cordon adhésif reliant le vitrage au rebord de fixation du cadre de la baie et en ce que les pattes d'attache sont intégrées dans le cordon adhésif partiel (28).

3. Vitrage d'automobile selon la revendication 1, caractérisé en ce que les pattes d'attache présentent un endroit de rupture (18) entre la section médiane (15) et la section d'extrémité (16) pour éliminer la section d'extrémité (16) après le durcissement du cordon adhésif.

4. Vitrage selon une des revendications 1 à 3, caractérisé en ce que les pattes d'attache sont pourvues d'un revêtement dans un matériau élastique mou.

5. Vitrage selon une des revendications 1 à 4, caractérisé en ce que les pattes d'attache (4, 13) présentent, entre leur section collée au vitrage (5, 14) et leur section d'extrémité (7, 16), une section médiane (6, 15), orientée perpendiculairement au vitrage, et qui détermine la distance séparant le vitrage et le rebord de fixation (34) du cadre de la baie.

6. Vitrage d'automobile suivant les revendications 1 à 5, caractérisé en ce que les pattes d'attache (4) sont réalisées d'une seule pièce et comportent une section de base (5) qui est collée au vitrage.

7. Vitrage d'automobile suivant les revendications 1 à 5, caractérisé en ce que les pattes d'attache sont en deux pièces et sont faites d'un étrier (10, 20) collé au vitrage et d'une patte d'insertion (13, 21) pouvant être introduite dans une fente d'insertion formée par l'étrier (10, 20) et par la surface du verre.

8. Vitrage d'automobile suivant la revendication 7, caractérisé en ce que la patte d'insertion (21) à l'état inséré, rend possible une jonction à épousement de forme avec l'étrier.

9. Vitrage d'automobile suivant la revendication 8, caractérisé en ce que la jonction à épousement de forme de la patte d'insertion (21) avec l'étrier (20) peut être établie par des saillies en forme de bec (24) qui s'accrochent sous l'étrier (20).

10. Procédé de fixation d'un vitrage selon l'une des revendications précédentes directement contre le rebord (34) du cadre d'une baie de véhicule automobile au moyen d'un cordon adhésif durcissable, caractérisé en ce que, après mise en position et pressage, les sections d'extrémité (7, 16) des pattes d'attaches (4, 13, 21) dirigées vers le centre du vitrage et faisant saillie au-dessus du rebord (34) sont repliées autour du rebord (34).

### Claims

1. Pane intended to be positioned and pressed against the flange (34) of the frame of an opening of an automobile by means of a hardenable adhesive cord, comprising on its face towards the flange (34) an opaque layer forming a border (2) and fixing lugs of metal (4, 13, 21) which serve for holding the pane in position in the frame of the opening until the adhesive cord has completely hardened, characterized in that the fixing lugs (4, 13, 21) are glued onto the opaque layer (2) at a distance from the peripheral arris of the pane and are made of deformable metal allowing them, after positioning and pressing of the pane, to be folded around the flange for the purpose of holding the pane in position.

2. Pane according to Claim 1, characterized in that it is provided, on the opaque layer forming a border, with a partial adhesive cord (28) forming a part of the adhesive cord connecting the pane to the fixing flange of the frame of the opening, and in that the fixing lugs are integrated into the partial adhesive cord (28).

3. Automobile pane according to Claim 1, characterized in that the fixing lugs have a rupture location (18) between the median section (15) and the end section (16) for the removal of the end section (16) after the adhesive cord has hardened.

4. Pane according to one of Claims 1 to 3, characterized in that the fixing lugs are provided with a covering of a soft elastic material.

5. Pane according to one of Claims 1 to 4, characterized in that the fixing lugs (4, 13) possess, between their section glued to the pane (5, 14) and their end section (7, 16), a median section (6, 15), orientated perpendicularly to the pane, which median section determines the distance separating the pane from the fixing flange (34) of the frame of the opening.

6. Automobile pane according to Claims 1 to 5, characterized in that the fixing lugs (4) are formed in one piece and comprise a base section (5) which is glued to the pane.

7. Automobile pane according to Claims 1 to 5, characterized in that the fixing lugs are in two pieces and are formed of a stirrup (10, 20) glued to the pane and of an insertion lug (13, 21) capable of being introduced into an insertion slot formed by the stirrup (10, 20) and by the surface of the glass.

8. Automobile pane according to Claim 7, characterized in that the insertion lug (21), in the inserted state, makes possible a form-fitting connection with the stirrup.

9. Automobile pane according to Claim 8, characterized in that the form-fitting connection of the insertion lug (21) with the stirrup (20) may be established by beak-shaped projections (24) which hook beneath the stirrup (20).

10. Method of fixing a pane according to one of the preceding Claims directly against the flange (34) of the frame of an automobile opening by means of a hardenable adhesive cord, characterized in that, after positioning and pressing, the end sections (7, 16) of the fixing lugs (4, 13, 21) pointing towards the centre of the pane and projecting beyond the flange (34) are folded around the flange (34).

**Patentansprüche**

1. Glasscheibe zum Positionieren und Anpressen an den Befestigungsflansch (34) des Fensterrahmens eines Kraftfahrzeugs mit Hilfe eines aushärtenden Kleberstrangs, wobei die Glasscheibe auf ihrer zum Befestigungsflansch (34) hin gerichteten Seite mit einer fahmenförmigen lichtundurchlässigen Schicht (2) und mit metallischen Befestigungslaschen (4, 13, 21) versehen ist, die zum Halten der Glasscheibe im Fensterrahmen in ihrer Position bis zur vollständigen Aushärtung des Kleberstrangs dienen, dadurch gekennzeichnet, daß die Befestigungslaschen (4, 13, 21) auf der lichtundurchlässigen Schicht (2) im Abstand von der Umfangskante der Glasscheibe durch Kleben befestigt sind und aus verformbarem Metall bestehen, so daß sie nach der Positionierung und dem Anpressen der Glasscheibe um den Befestigungsflansch herumgebogen werden können, um die Glasscheibe in ihrer Position zu halten.

2. Glasscheibe nach Anspruch 1, dadurch gekennzeichnet, daß sie auf der rahmenförmigen lichtundurchlässigen Schicht mit einem Kleber-Teilstrang (28) versehen ist, der einen Teil des die Glasscheibe mit dem Befestigungsflansch des Fensterrahmens verbindenden Kleberstrangs bildet, und daß die Befestigungslaschen in den Kleber-Teilstrang (28) integriert sind.

3. Autoglasscheibe nach Anspruch 1, dadurch gekennzeichnet, daß die Befestigungslaschen zwischen dem Mittelabschnitt (15) und dem Endabschnitt (16) eine Sollbruchstelle (18) aufweisen, um nach dem Aushärten des Kleberstrangs den Endabschnitt (16) zu entfernen.

4. Glasscheibe nach einem der Ansprüche 1 bis 3, dadurch gekennzeichnet, daß die Befestigungslaschen mit einem Überzug aus einem weichelastischen Material versehen sind.

5. Glasscheibe nach einem der Ansprüche 1 bis 4, dadurch gekennzeichnet, daß die Befestigungslaschen (4, 13) zwischen ihrem mit der Glasscheibe verklebten Abschnitt (5, 14) und ihrem Endabschnitt (7, 16) einen mittleren Abschnitt (6, 15) aufweisen, der senkrecht zur Glasscheibe ausgerichtet ist und der den Abstand zwischen der Glasscheibe un dem Befestigungsflansch (34) des Fensterrahmens bestimmt.

6. Autoglasscheibe nach Anspruch 1 bis 5, dadurch gekennzeichnet, daß die Befestigungslaschen (4) einstückig ausgebildet sind und einen Fußabschnitt (5) aufweisen, der mit der Glasscheibe verklebt ist.

7. Autoglasscheibe nach Anspruch 1 bis 5, dadurch gekennzeichnet, daß die Befestigungslaschen aus zwei Teilen bestehen und einen mit der Glasscheibe verklebten Bügel (10, 20) und eine Einstecklasche (13, 21) umfassen, die in einen von dem Bügel (10, 20) und der Glasoberfläche gebildeten Einsteckschlitz einschiebbar ist.

8. Autoglasscheibe nach Anspruch 7, dadurch gekennzeichnet, daß die Einstecklasche (21) im eingesteckten Zustand eine formschlüssige Verbindung mit dem Bügel ermöglicht.

9. Autoglasscheibe nach Anspruch 8, dadurch gekennzeichnet, daß die formschlüssige Verbindung der Einstecklasche (21) mit dem Bügel (20) durch den Bügel (20) untergreifende nasenartige Vorsprünge (24) herstellbar ist.

10. Verfahren zur Befestigung einer Glasscheibe nach einem der voraufgehenden Ansprüche unmittelbar mit dem Befestigungsflansch (34) des Fensterrahmens eines Kraftfahrzeugs mit Hilfe eines aushärtenden Kleberstrangs, dadurch gekennzeichnet, daß nach dem Positionieren und Andrücken der Glasscheibe die zur Mitte der Glasscheibe hin gerichteten und über den Befestigungsflansch (34) überstehenden Endabschnitte (7, 16) der Befestigungslaschen (4, 13, 21) um den Befestigungsflansch (34) herumgebogen werden.

Fig. 1

EP 0 148 797 B1

*Fig.2*

*Fig.3*

*Fig.4*

*Fig.5*

**Fig. 6**

**Fig. 7**

3